# EUROPÄISCHE PATENTSCHRIFT

(11) **EP 2 513 524 B1**
(45) Veröffentlichungstag und Bekanntmachung des Hinweises auf die Patenterteilung: **24.06.2015**
(21) Anmeldenummer: 10778954.7
(22) Anmeldetag: 03.11.2010
(51) Int. Cl.: F16H 63/18, F16H 63/30

(54) **SCHALTEINRICHTUNG FÜR EIN ZAHNRÄDERWECHSELGETRIEBE**
SHIFTING DEVICE FOR A GEARBOX
DISPOSITIF DE COMMUTATION POUR UNE BOÎTE DE VITESSES À ENGRENAGES

(30) Priorität: 18.12.2009 DE 102009054942
(43) Veröffentlichungstag der Anmeldung: 24.10.2012
(73) Patentinhaber: ZF Friedrichshafen AG, 88038 Friedrichshafen (DE)
(72) Erfinder: RICHTER, Frank, 88094 Oberteuringen (DE); KELLER, Reiner, 78351 Bodman-Ludwigshafen (DE)
(86) Internationale Anmeldenummer: PCT/EP2010/066702
(87) Internationale Veröffentlichungsnummer: WO 2011/072945

(56) Entgegenhaltungen:
- DE-A1- 19 920 064
- DE-T2- 60 001 023

## Beschreibung

Die Erfindung betrifft eine Schalteinrichtung für ein Zahnräderwechselgetriebe, mit mindestens einer Schiebemuffe, welche drehfest und axial verschiebbar auf einer Getriebewelle aufgesetzt und zu welcher zumindest auf einer Seite je ein Losrad benachbart platziert ist, das frei rotierbar auf der Getriebewelle angeordnet ist, wobei die mindestens eine Schiebemuffe durch eine Betätigung von zugehörigen Stellmitteln aus einer Neutralstellung axial in Richtung des je einen Losrades in eine Schaltstellung bewegbar ist und bei Erreichen der Schaltstellung eine Koppelung des je einen Losrades mit der Getriebewelle hervorruft.

Zahnräderwechselgetriebe verfügen üblicherweise über Schalteinrichtungen, über welche eines von mehreren schaltbaren Übersetzungsverhältnissen geschaltet und damit eine bestimmte Drehzahl- und Drehmomentübersetzung eingestellt werden kann. Bei Kraftfahrzeuggetrieben setzt sich eine Schalteinrichtung hierbei üblicherweise aus einer inneren und einer äußeren Schaltung zusammen, wobei die innere Schaltung, die Gegenstand der vorliegenden Erfindung ist, innerhalb eines Getriebegehäuses liegende Komponenten, wie Steuerwelle, Schaltschienen und Synchronisationskomponenten zur Schaltung des jeweiligen Übersetzungsverhältnisses umfasst. Im Bereich moderner Kraftfahrzeuge werden die Elemente der inneren Schalteinrichtung allerdings immer häufiger direkt elektronisch angesteuert und betätigt, so dass mechanische Komponenten einer äußeren Schalteinrichtung weitestgehend entfallen können. In diesen Fällen werden Schaltbewegungen der Komponenten der inneren Schalteinrichtung direkt durch innerhalb des Getriebegehäuses angeordnete, elektronische Aktuatoren hervorgerufen.

Aus der DE 600 01 023 T2 ist eine Schalteinrichtung eines Zahnräderwechselgetriebes bekannt, bei welcher Schiebemuffen über diesen zugeordnete Stellmittel in Form von Schaltgabeln axial verschoben werden können, um durch die jeweilige Axialbewegung gezielt ein zugehöriges Übersetzungsverhältnis des Zahnräderwechselgetriebes anzuwählen. Es ist hierbei im allgemeinen bekannt, dass die Schiebemuffen dabei jeweils drehfest und axial verschiebbar auf einer Getriebewelle angeordnet sind, die zudem zumindest auf einer Seite benachbart zu der jeweiligen Schiebemuffe ein Losrad trägt. Diese Losräder sind hierbei frei rotierbar auf der Getriebewelle vorgesehen und stehen im permanenten Zahneingriff mit Ritzeln einer im Vorgelege- oder als parallele Eingangs- oder Ausgangswelle angeordneten, weiteren Getriebewelle. Entsprechend der Zähnezahlverhältnisse der jeweils miteinander kämmenden Zahnräder werden hierbei die schaltbaren Übersetzungsverhältnisse des Zahnräderwechselgetriebes definiert. Bei einer axialen Bewegung der jeweiligen Schiebemuffe aus einer Neutralstellung in eine Schaltstellung in Richtung des jeweiligen Losrades wird dieses Losrad bei Erreichen der Schaltstellung durch die Schiebemuffe mit der Getriebewelle gekuppelt und damit die jeweilige definierte Übersetzung der Drehzahlen und Drehmomente von der einen Getriebewelle auf die andere Getriebewelle realisiert.

Bei der DE 600 01 023 T2 sind die Schaltgabeln der einzelnen Schiebemuffen auf einer gemeinsamen Steuerwelle axial verschiebbar geführt, die über ein endseitig angeordnetes Ritzel durch ein elektrisches Stellglied gezielt verdreht werden kann. Des Weiteren ist auf der Steuerwelle ein hiermit fest verbundener Zylinder aufgesetzt, welcher auf einem Außendurchmesser eine, in axialer Richtung kurvenartig verlaufende Nut aufweist. Auf dem Zylinder ist ferner eine Hülse platziert, die mit einem, an ihrem Innendurchmesser ausgeprägten Stift in die Nut des Zylinders eingreift und bei einer Rotation der Steuerwelle und entsprechend dem Verlauf der Nut des Zylinders eine axiale Bewegung auf dem Zylinder ausführt. Auf ihrem Außendurchmesser verfügt die Hülse weiterhin über Schaltfinger, welche je nach Winkelposition der Hülse mit einer der Schaltgabeln in Kontakt treten und dementsprechend die Axialbewegung der Hülse auf die jeweilige Gabel übertragen. Um hierbei die jeweilige Winkelposition der Hülse einzustellen, steht diese über eine Verzahnung mit einer Zwischenwelle in Verbindung, die wiederum über ein Zahnrad mit der Steuerwelle in Kontakt steht.

Bei Verdrehung der Steuerwelle über das elektrische Stellglied wird entsprechend der Rotation des Zylinders die Hülse in axialer Richtung bewegt und führt hierbei eine der Schaltgabeln mit sich, so dass letztendlich eine Bewegung der jeweiligen Schiebemuffe und damit eine Schaltung eines zugehörigen Übersetzungsverhältnisses eingeleitet wird. Entsprechend der Übersetzung zwischen Steuerwelle und Zwischenwelle verdreht die Zwischenwelle die Hülse zudem bei Rotation der Steuerwelle gegenüber der selbigen, so dass die Schaltfinger entsprechend der Schaltfolge des Schaltgetriebes nacheinander mit den einzelnen Schaltgabeln in Kontakt treten. Somit ist bei Betätigung des elektrischen Stellgliedes eine aufeinanderfolgende Hoch- bzw. Rückschaltung möglich.

Das Dokument DE 19920064 A1 zeigt den nächtliegenden Stand der Technik mit allen Merkmalen des Oberbegriffs des Anspruchs 1.

Ausgehend von diesem Stand der Technik ist es die Aufgabe der vorliegenden Erfindung, eine Schalteinrichtung eines Zahnräderwechselgetriebes zur Verfügung zu stellen, welches sich durch eine möglichst geringe Bauteilanzahl auszeichnet und in Bezug auf die Wahl der einzelnen Übersetzungsverhältnisse einen möglichst großen Freiraum bietet.

Diese Aufgabe wird ausgehend von einem Oberbegriff des Anspruchs 1 in Verbindung mit dessen kennzeichnenden Merkmalen gelöst. Die darauf folgenden, abhängigen Ansprüche geben jeweils vorteilhafte Weiterbildungen der Erfindung wieder.

Die Erfindung umfasst die technische Lehre, dass die zugehörigen Stellmittel ortsfest angeordnet sind und bei Betätigung in mindestens eine Schaltnut eingreifen, welche auf einem Außendurchmesser der jeweiligen Schiebemuffe vorgesehen ist und hierbei in axialer Richtung einen kurvenförmigen Verlauf aufweist, so dass entsprechend dem Verlauf der Schaltnut bei Rotation der Getriebewelle eine axiale Verschiebung der mindestens einen Schiebemuffe hervorrufbar ist. Durch ein Zusammenwirken der mindestens einen Schaltnut mit je zugehörigen Stellmitteln der jeweiligen Schiebemuffe kann die jeweilige Schiebemuffe individuell betätigt werden, indem die Stellmittel bei Betätigung in die Schaltnut eingreifen. Hierbei ist der Aufbau dieser Schalteinrichtung gleichzeitig mit einer geringen Bauteilanzahl realisiert. Des Weiteren können auch die Stellmittel kleiner dimensioniert werden, da zum Einleiten der Schaltbewegung der Schiebemuffe durch diese lediglich die nötige Kraft zum Einfassen in die Schaltnut aufgebracht werden muss. Denn die eigentliche Schaltkraft zum Erzeugen der axialen Verschiebung der Schiebemuffe wird durch die rotierende Getriebewelle erzeugt und schraubenartig in die axiale Verschiebung der Schiebemuffe umgesetzt. Dabei kann je nach axialem Verlauf der mindestens einen Schaltnut die Annäherung der Schiebemuffe an das Losrad mit einer definierten Näherungsgeschwindigkeit erfolgen und hierbei bei einer relativ hohen Schaltkraft eine Koppelung des Losrades mit der Getriebewelle erfolgen.

Im Unterschied hierzu weist die inneren Schalteinrichtung des Standes der Technik einen erheblich komplizierteren Aufbau auf und benötigt eine größere Anzahl an Bauteilen, um Schaltungen von Übersetzungsverhältnissen darstellen zu können. Hierbei muss insbesondere eine Verdrehung der auf dem Zylinder laufenden Hülse genau auf die aufeinanderfolgende Betätigung der Schaltgabeln der einzelnen Schiebemuffen abgestimmt werden. Zudem ist ein Überspringen einzelner Übersetzungsverhältnisse nicht möglich, da die Schiebemuffen in einer festen Reihenfolge nacheinander in die jeweiligen axialen Richtungen verschoben werden. Schließlich muss auch das elektrische Stellglied zur Verdrehung der Steuerwelle und der Zwischenwelle entsprechend groß dimensioniert werden, da sowohl die die jeweilige Schaltbewegung hervorrufende Verdrehung der Steuerwelle als auch die Verdrehung der Hülse kräftemäßig durch das Stellglied dargestellt werden muss.

Gemäß einer Ausgestaltung der Erfindung sind erste und zweite Schaltnuten auf der mindestens einen Schiebemuffe vorgesehen, die einen gegensätzlichen Verlauf in axialer Richtung aufweisen, wobei die ersten Schaltnuten bei Eingreifen der Stellmittel die mindestens eine Schiebemuffe in die Schaltstellung bewegen, während die zweiten Schaltnuten bei Eingreifen der Schaltmittel für eine Rückbewegung der mindestens einen Schiebemuffe in die Neutralstellung sorgen. Durch diese Maßnahme wird die Überführung der Schiebemuffe zum einen in die Schaltstellung zum anderen in die Neutralstellung durch jeweils zugeordnete Schaltnuten hervorgerufen, so dass die Bewegung der Schiebemuffe präzise durch Eingreifen in die jeweiligen Schaltnuten gesteuert werden kann.

In Weiterbildung der Erfindung laufen die ersten und die zweiten Schaltnuten jeweils in Drehrichtung im Endbereich auf ein Niveau des Außendurchmessers der Schiebemuffe aus. Dies hat den Vorteil, dass die Stellmittel nach Erreichen der gewünschten Stellung der Schiebemuffe nicht gezielt aus der Schaltnut herausgeführt werden müssen, sondern durch das Auslaufen der Nut selbsttätig in die Ausgangsstellung zurückbewegt werden.

Es ist eine weitere, vorteilhafte Ausführungsform der Erfindung, dass die Stellmittel an gegenüberliegenden, radialen Seiten der mindestens einen Schiebemuffe angeordnet sind. Durch eine gegenüberliegende Platzierung von Stellmitteln um die Schiebemuffe herum wird ein Verkippen bzw. Verkanten der Schiebemuffe bei Ausführen der axialen Verschiebung unterbunden.

Entsprechend einer weiteren Ausgestaltung der Erfindung liegen Stellmittel in Form von mindestens einem ausfahrbaren Schaltstift vor, welcher elektromagnetisch betätigbar ist. Vorteilhafterweise lassen sich die Stellmittel hierdurch sehr platzsparend im Bereich der Schiebemuffe realisieren, während gleichzeitig eine einfache und präzise Regelung möglich ist. Es ist hierbei allerdings auch denkbar den mindestens einen Schaltstift als pneumatisch oder hydraulisch betätigtes Bauteil auszuführen.

In Weiterbildung der Erfindung steht die mindestens eine Schiebemuffe an einem Innendurchmesser mit einer Rastierung in Wirkverbindung, welche die mindestens eine Schiebemuffe jeweils in der Neutralstellung und der Schaltstellung arretiert. Zweckmäßigerweise liegt die Rastierung hierbei in Form mindestens einer federbelasteten Kugel vor, die in einer zugehörigen Ausnehmung der Getriebewelle platziert ist und in der Neutralstellung und der Schaltstellung der Schiebemuffe mit in diesen Stellungen ihr gegenüberliegenden Arretiernuten an der mindestens einen Schiebemuffe zusammenwirkt. Durch die Rastierung wird die Gefahr eines ungewollten Zurückwanderns der Schiebemuffe aus der jeweiligen Position, in welche sie über die Stellmittel gezielt geführt worden ist, deutlich vermindert. Eine Kugelrastierung lässt sich hierbei mit geringem Aufwand und platzsparend zwischen Getriebewelle und Schiebemuffe integrieren. Zudem kann entsprechend der Federbelastung der mindestens einen Kugel die jeweilige Kraft zum Halten der Schiebemuffe in der gewünschten Position definiert werden.

Es ist eine vorteilhafte Ausgestaltung der Erfindung, dass die mindestens eine Schiebemuffe bei einer axialen Bewegung in die Schaltstellung eine Kupplung betätigt, die mit dem je einen Losrad in Verbindung steht. Vorteilhafterweise ist hierbei zwischen der mindestens einen Schiebemuffe und der Kupplung ein Federelement platziert. Mittels einer derartigen Ausgestaltung kann bei einer Bewegung der mindestens einen Schiebemuffe mittelbar eine Koppelung des je einen Losrades mit der Getriebewelle erreicht werden. Durch die zwischengeschaltete Feder kann dabei jederzeit eine ausreichende Anpresskraft zur Betätigung der jeweiligen Kupplung dargestellt werden. Die Kupplung ist hierbei vorzugsweise entweder in Form einer Synchronisation oder einer Lamellenkupplung ausgeführt, die jeweils bei Betätigung das Losrad mit der Getriebewelle koppelt.

Weitere, die Erfindung verbessernde Maßnahmen werden nachstehend gemeinsam mit der Beschreibung bevorzugter Ausführungsform der Erfindung anhand von Fig. näher dargestellt.

Es zeigt:
- Fig. 1: einen Längsschnitt der Schalteinrichtung gemäß einer ersten Ausführungsform der Erfindung;
- Fig. 2: eine Draufsicht auf eine Schiebemuffe und zugehörige Stellmittel der Schalteinrichtung aus Fig. 1;
- Fig. 3: eine Seitenansicht der Schiebemuffe und der Stellmittel der in Fig. 1 dargestellten Schalteinrichtung;
- Fig. 4: einen Längsschnitt der erfindungsgemäßen Schalteinrichtung gemäß einer weiteren, zweiten Ausführungsform der Erfindung; und
- Fig. 5: einen Längsschnitt der erfindungsgemäßen Schalteinrichtung entsprechend einer dritten Ausführungsform.

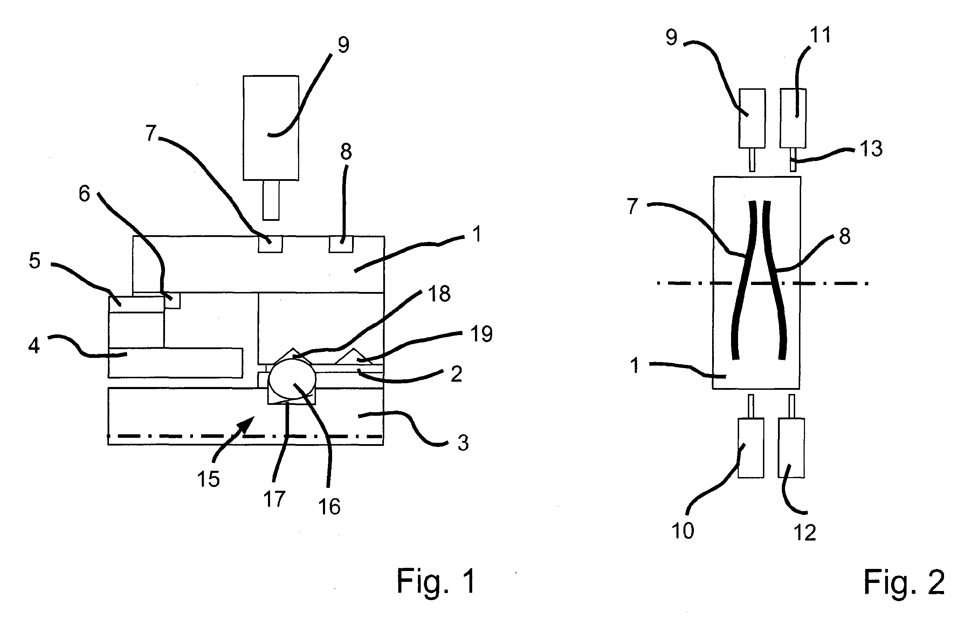

Aus Fig. 1 ist ein Längsschnitt der erfindungsgemäßen Schalteinrichtung gemäß einer ersten Ausführungsform der Erfindung ersichtlich. Diese umfasst eine Schiebemuffe 1, welche über eine Mitnahmeverzahnung 2 drehfest und axial verschiebbar auf einer Getriebewelle 3 angeordnet ist und in axialer Richtung benachbart zu einem Losrad 4 platziert ist. Das Losrad 4, welches in dieser Ansicht nur teilweise dargestellt ist, ist frei rotierbar auf der Getriebewelle 3 angeordnet und steht über eine - nicht dargestellte - Verzahnung mit einem - ebenfalls nicht dargestellten - Ritzel eines definierten Übersetzungsverhältnisses des Schaltgetriebes permanent kämmend in Eingriff. Auf einer, der Schiebemuffe 1 zugewandten Seite verfügt das Losrad 4 über eine Schaltverzahnung 5, die korrespondierend zu einer Verzahnung 6 an der Schiebemuffe 1 ausgestaltet ist. Dabei weisen die Schaltverzahnungen 5 des Losrades 4 und die Verzahnung 6 der Schiebemuffe 1 jeweils einander zugewandte Zahnflanken auf und sind dabei entsprechend einer dem Fachmann bekannten Klauenkupplung ausgestaltet. Es ist hierbei allerdings ebenso denkbar, durch eine entsprechende Gestaltung der Schiebemuffe 1 und des Losrades 4, sowie durch Zwischenschaltung eines oder mehrerer Synchronringe eine Sperrsynchronisation auszubilden.

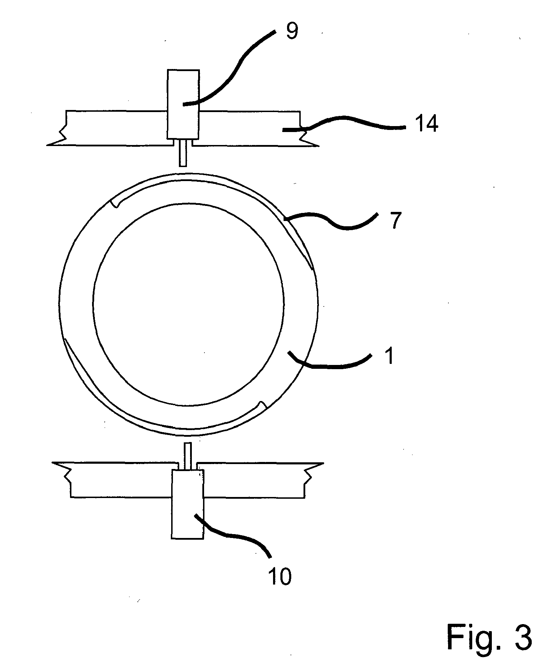

Auf ihrem Außendurchmesser verfügt die Schiebemuffe 1 des Weiteren über Schaltnuten 7 und 8, welche, wie insbesondere aus der Draufsicht aus Fig. 2 ersichtlich, einen in axialer Richtung kurvenartig ausgeprägten Verlauf aufweisen. Zudem sind an gegenüberliegenden, radialen Seiten der Schiebemuffe 1 jeweils Schaltstiftpaare 9, 10 und 11, 12 vorgesehen, die bei einer Betätigung mit einem jeweils ausfahrbaren Bolzen 13 in die je zugehörige Schaltnut 7 oder 8 eingreifen. Wie insbesondere aus der Seitenansicht aus Fig. 3 ersichtlich ist, sind die Schaltstifte 9 bis 12 hierbei jeweils ortsfest in einem Gehäuse 14 platziert, so dass bei einer Bewegung der jeweiligen Schaltstiftpaare 9 und 10 bzw. 11 und 12 in die je zugehörigen Schaltnuten 7 oder 8 aufgrund des axial veränderlichen Verlaufs dieser Schaltnuten 7 bzw. 8 eine entsprechende axiale Verschiebung der Schiebemuffe 1 auf der Getriebewelle 3 hervorgerufen wird. Dabei wird je nach Drehrichtung der Getriebewelle 3 und damit auch der Schiebemuffe 1 durch das eine Schaltstiftpaar 9 und 10 mit der Schaltnut 7 eine Axialbewegung der Schiebemuffe 1 in Richtung des Losrades 4 und durch das andere Schaltstiftpaar 11 und 12 mit der Schaltnut 8 eine, vom Losrad 4 weggerichtete Rückbewegung der Schiebemuffe 1 dargestellt. Zudem sind die Schaltstiftpaare 9 und 10 bzw. 11 und 12 jeweils an gegenüberliegenden, radialen Seiten der Schiebemuffe 1 platziert, wie aus Fig. 3 anhand des Schaltstiftpaares 9 und 10 ersichtlich, wodurch ein Verkippen der Schiebemuffe 1 beim axialen Bewegen verhindert wird.

Die Schaltstifte 9 bis 12 sind als elektromagnetisch betätigbare Bauteile ausgeführt, die bei Stromversorgung für ein Ausfahren des jeweiligen Bolzens 13 sorgen. Dem Fachmann wird an dieser Stelle allerdings klar sein, dass die Schaltstifte 9 bis 12 ebenso gut als hydraulisch oder pneumatisch betätigbare Bauteile ausgeführt sein können.

In Fig. 1 ist die Schiebemuffe 1 im Zustand einer Schaltstellung dargestellt, in welcher sie über die Verzahnung 6 mit der Schaltverzahnung 5 des Losrades 4 in Eingriff steht. In dieser Schaltstellung ist das Losrad 4 somit über die Schiebemuffe 1 drehfest mit der Getriebewelle 3 gekuppelt. Um die Schiebemuffe 1 nun aus dieser Schaltstellung in eine sogenannte Neutralstellung zu bewegen, in welcher Schaltverzahnung 5 und Verzahnung 6 nicht mehr miteinander in Eingriff stehen und das Losrad 4 somit wieder frei rotierbar gegenüber der Getriebewelle 3 ist, müssen lediglich die Schaltstifte 9 und 10 elektrisch angesteuert werden, woraufhin die jeweiligen Bolzen 13 in die zugehörige Schaltnut 7 eingreifen. Aufgrund des axialen Verlaufs der Schaltnut 7 und durch die gemeinsame Rotation der Schiebemuffe 1 mit der Getriebewelle 3 wird die Schiebemuffe 1 daraufhin in axialer Richtung von dem Losrad 4 wegbewegt. Bei Erreichen der gewünschten Neutralstellung werden die Schaltstifte 9 und 10 wieder in eine Ausgangsposition zurückbewegt, indem die Schaltnuten 7, ebenso wie die Schaltnuten 8, in Drehrichtung im Endbereich auf ein Niveau des Außendurchmessers der Schiebemuffe 1 auslaufen, wie auch in Fig. 3 zu erkennen ist. Somit werden die Bolzen 13 der Schaltstifte 9 und 10 selbsttätig aus den Schaltnuten 7 herausgedrückt.

Da allerdings die jeweiligen Schaltstiftpaare 9 und 10 bzw. 11 und 12 ab Erreichen der gewünschten Stellung der Schiebemuffe nicht mehr mit der Schiebemuffe 1 in Kontakt stehen und damit unter Umständen unerwünschte axiale Bewegungen der Schiebemuffe 1 auftreten können, ist zwischen der Schiebemuffe 1 und der Getriebewelle 3 eine Rastierung 15 vorgesehen. Diese besteht aus einer federbelasteten Kugel 16, welche in einer Ausnehmung 17 der Getriebewelle 3 platziert ist und jeweils in der Neutralstellung und der Schaltstellung der Schiebemuffe 1 mit ihr jeweils gegenüberliegenden Arretiernuten 18 und 19 an einem Innendurchmesser der Schiebemuffe 1 zusammenwirkt. Entsprechend der Federbelastung der Kugel 16 wird die Schiebemuffe 1 dabei durch die Kugel in der jeweiligen Position arretiert. Wird nun ein Wechsel von der einen Stellung in die jeweils anderen Stellung über die Schaltstifte 9 bis 12 erzwungen, so wird die Kugel 16 in die Ausnehmung 17 zurückgedrückt bis sie in Überdeckung mit der jeweils anderen Arretiernut 18 bzw. 19 an der Schiebemuffe 1 kommt.

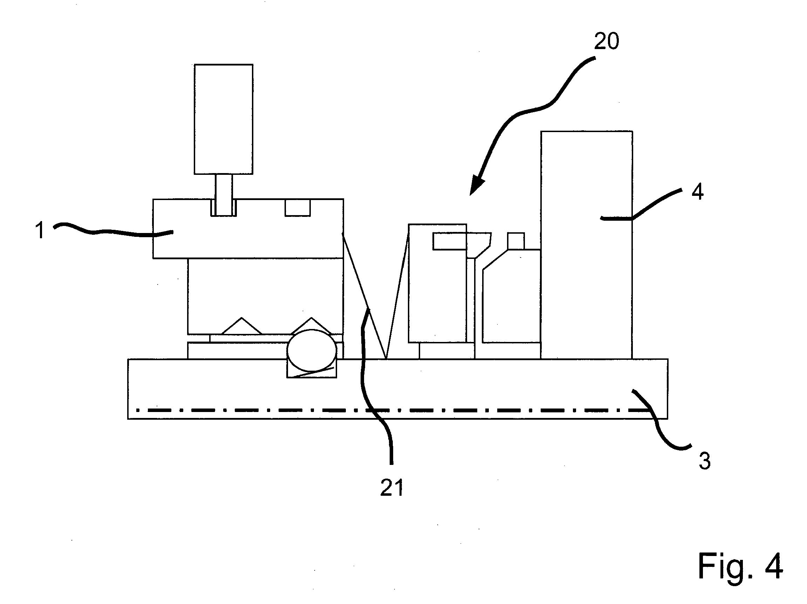

Fig. 4 verdeutlicht die erfindungsgemäße Schalteinrichtung gemäß einer zweiten Ausführungsform der Erfindung. Im Unterschied zu der im Vorfeld beschriebenen Variante kuppelt die Schiebemuffe 1 in diesem Fall in der Schaltstellung das Losrad 4 nicht unmittelbar mit der Getriebewelle 3, sondern betätigt eine Kupplung in Form einer Synchronisation 20, welche bei Betätigung dann das Losrad 4 auf dem Fachmann bekannte Art und Weise mit der Getriebewelle 3 kuppelt. Um die hierfür nötige Anpresskraft darstellen zu können, ist zwischen der Schiebemuffe 1 und der Synchronisation 20 ein Federelement 21 platziert, welches nach einer Vorspannung durch die Bewegung der Schiebemuffe 1 in die Schaltstellung stetig eine Anpresskraft auf die Synchronisation 20 überträgt. Die Schiebemuffe 1 kuppelt das Losrad 4 also in diesem Fall mittelbar mit der Getriebewelle 3.

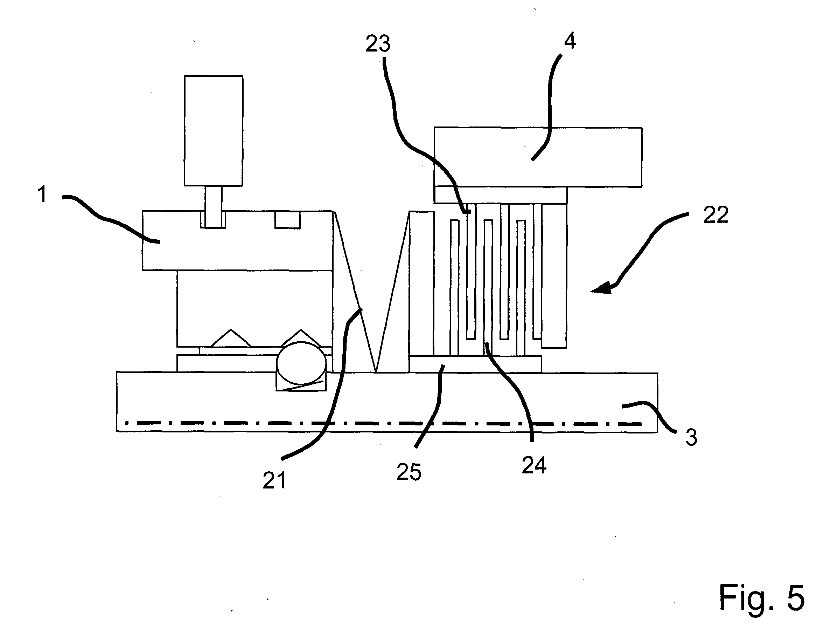

In Fig. 5 ist eine weitere, dritte Ausführungsform der Erfindung dargestellt. Im Unterschied zu der vorherigen Variante ist die Kupplung zur Koppelung des Losrades 4 mit der Getriebewelle 3 in diesem Fall als Lamellenkupplung 22 ausgebildet, deren Außenlamellen 23 mit dem Losrad 4 und dessen Innenlamellen 24 mit einem, auf der Getriebewelle 3 axial verschiebbaren Schlitten 25 verbunden sind. Dieser Schlitten 25 ist dabei drehfest auf der Getriebewelle 3 aufgesetzt und kuppelt das Losrad 4 bei einem Kontakt der Außenlamellen 23 mit den Innenlamellen 24 kraftschlüssig mit der Getriebewelle 3. Die Schiebemuffe 1 betätigt bei Bewegung in die Schaltstellung den Schlitten 25 über das zwischengeschaltete Federelement 21, so dass die Lamellenkupplung 22 geschlossen wird. Es erfolgt also auch in diesem Fall eine mittelbare Koppelung des Losrades 4 mit der Getriebewelle 3 über die Schiebemuffe 1.

Mittels der erfindungsgemäßen Schalteinrichtung ist es somit möglich, Schaltvorgänge bei einem sehr kompakten Aufbau der selbigen und einer geringen Bauteilanzahl durchführen zu können. Hierbei können die Stellmittel in Form der Schaltstifte 9 bis 12 mit einer kompakten Größe ausgeführt werden, da die eigentliche Schaltkraft zur Koppelung des Losrades 4 mit der Getriebewelle 3 aus der Drehbewegung der Getriebewelle 3 und der Schraubwirkung der Schaltnuten 7 bzw. 8 herrührt. Dabei steht die Schaltkraft über der Bewegung der Schiebemuffe 1 in konstanter Höhe zur Verfügung.

### Bezugszeichen

- 1: Schiebemuffe
- 2: Mitnahmeverzahnung
- 3: Getriebewelle
- 4: Losrad
- 5: Schaltverzahnung
- 6: Verzahnung
- 7: Schaltnuten
- 8: Schaltnuten
- 9: Schaltstift
- 10: Schaltstift
- 11: Schaltstift
- 12: Schaltstift
- 13: Bolzen
- 14: Gehäuse
- 15: Rastierung
- 16: Kugel
- 17: Ausnehmung
- 18: Arretiernut
- 19: Arretiernut
- 20: Synchronisation
- 21: Federelement
- 22: Lamellenkupplung
- 23: Außenlamellen
- 24: Innenlamellen
- 25: Schlitten

## Patentansprüche

1. Schalteinrichtung für ein Zahnräderwechselgetriebe, mit mindestens einer Schiebemuffe (1), welche drehfest und axial verschiebbar auf einer Getriebewelle (3) aufgesetzt und zu welcher zumindest auf einer Seite je ein Losrad (4) benachbart platziert ist, das frei rotierbar auf der Getriebewelle (3) angeordnet ist, wobei die mindestens eine Schiebemuffe (1) durch eine Betätigung von zugehörigen Stellmitteln aus einer Neutralstellung axial in Richtung des je einen Losrades (4) in eine Schaltstellung bewegbar ist und bei Erreichen der Schaltstellung eine Koppelung des je einen Losrades (4) mit der Getriebewelle (3) hervorruft, **dadurch gekennzeichnet, dass** die zugehörigen Stellmittel ortsfest angeordnet sind und bei Betätigung in mindestens eine Schaltnut (7, 8) eingreifen, welche auf einem Außendurchmesser der mindestens einen Schiebemuffe (1) vorgesehen ist und einen in axialer Richtung kurvenförmigen Verlauf aufweist, so dass entsprechend dem Verlauf der mindestens einen Schaltnut (7; 8) bei Rotation der Getriebewelle (3) eine axiale Verschiebung der mindestens einen Schiebemuffe (1) hervorrufbar ist.

2. Schalteinrichtung nach Anspruch 1, **dadurch gekennzeichnet, dass** erste und zweite Schaltnuten (7, 8) vorgesehen sind, die einen gegensätzlichen kurvenförmigen Verlauf in axialer Richtung aufweisen, wobei die ersten Schaltnuten (8) bei Eingreifen der Stellmittel die mindestens eine Schiebemuffe (1) in die Schaltstellung bewegen, während die zweiten Schaltnuten (7) bei Eingreifen der Stellmittel für eine Rückbewegung der mindestens einen Schiebemuffe (1) in die Neutralstellung sorgen.

3. Schalteinrichtung nach Anspruch 2, **dadurch gekennzeichnet, dass** die ersten und die zweiten Schaltnuten (7, 8) jeweils in Drehrichtung im Endbereich auf ein Niveau des Außendurchmessers der mindestens einen Schiebemuffe (1) auslaufen.

4. Schalteinrichtung nach einem der Ansprüche 1 bis 3, **dadurch gekennzeichnet, dass** die Stellmittel an gegenüberliegenden, radialen Seiten der mindestens einen Schiebemuffe (1) angeordnet sind.

5. Schalteinrichtung nach einem der vorhergehenden Ansprüche, **dadurch gekennzeichnet, dass** die Stellmittel in Form von mindestens einem ausfahrbaren Schaltstift (9 bis 12) vorliegen, welcher elektromagnetisch betätigbar ist.

6. Schalteinrichtung nach einem der vorhergehenden Ansprüche, **dadurch gekennzeichnet, dass** die mindestens eine Schiebemuffe (1) an einem Innendurchmesser mit einer Rastierung (15) in Wirkverbindung steht, welche die mindestens eine Schiebemuffe (1) jeweils in der Neutralstellung und der Schaltstellung arretiert.

7. Schalteinrichtung nach Anspruch 6, **dadurch gekennzeichnet, dass** die Rastierung (15) in Form mindestens einer federbelasteten Kugel (16) ausgebildet ist, welche in einer zugehörigen Ausnehmung (17) der Getriebewelle (3) platziert ist und in der Neutralstellung und der Schaltstellung der mindestens einen Schiebemuffe (1) mit jeweils gegenüberliegenden Arretiernuten (18, 19) der mindestens einen Schiebemuffe (1) zusammenwirkt.

8. Schalteinrichtung nach einem vorhergehenden Ansprüche, **dadurch gekennzeichnet, dass** die mindestens eine Schiebemuffe (1) bei einer axialen Bewegung in die Schaltstellung eine Kupplung betätigt, die mit dem je einen Losrad (4) in Verbindung steht.

9. Schalteinrichtung nach Anspruch 8, **dadurch gekennzeichnet, dass** zwischen der mindestens einen Schiebemuffe (1) und der Kupplung ein Federelement (21) platziert ist.

10. Schalteinrichtung nach Anspruch 8 oder 9, **dadurch gekennzeichnet, dass** die Kupplung eine Synchronisation (20) ist.

11. Schalteinrichtung nach Anspruch 8 oder 9, **dadurch gekennzeichnet, dass** die Kupplung eine Lamellenkupplung (22) ist.

12. Zahnräderwechselgetriebe eines Kraftfahrzeuges, umfassend eine Schalteinrichtung nach einem der Ansprüche 1 bis 11.

## Claims

1. Shift device for a change-speed gearbox, having at least one sliding sleeve (1) which is mounted in rotationally conjoint and axially displaceable fashion on a gearbox shaft (3) and adjacent to which, at least on one side, there is positioned a respective idler gear (4) which is arranged in freely rotatable fashion on the gearbox shaft (3), wherein the at least one sliding sleeve (1) can, by operation of associated actuation means, be moved from a neutral position axially in the direction of the respective idler gear (4) into a shifted position, and upon reaching the shifted position, effects coupling between the respective idler gear (4) and the gearbox shaft (3), **characterized in that** the associated actuation means are arranged in positionally fixed fashion and, when operated, engage into at least one shift groove (7, 8) which is provided on an outer diameter of the at least one sliding sleeve (1) and which has a profile which is curved in an axial direction, such that, as the gearbox shaft (3) rotates, an axial displacement of the at least one sliding sleeve (1) can be effected in accordance with the profile of the at least one shift groove (7; 8).

2. Shift device according to Claim 1, **characterized in that** first and second shift grooves (7, 8) are provided which have opposing curved profiles in an axial direction, wherein the first shift grooves (8), when engaged by the actuation means, move the at least one sliding sleeve (1) into the shifted position, whereas the second shift grooves (7), when engaged by the actuation means, serve to effect a return movement of the at least one sliding sleeve (1) into the neutral position.

3. Shift device according to Claim 2, **characterized in that** the first and second shift grooves (7, 8) each taper out, in the end region in the direction of rotation, at a level of the outer diameter of the at least one sliding sleeve (1).

4. Shift device according to one of Claims 1 to 3, **characterized in that** the actuation means are arranged on opposite radial sides of the at least one sliding sleeve (1).

5. Shift device according to one of the preceding claims, **characterized in that** the actuation means are provided in the form of at least one extendable shift pin (9 to 12) which can be electromagnetically operated.

6. Shift device according to one of the preceding claims, **characterized in that** the at least one sliding sleeve (1) is operatively connected, at an internal diameter, to a detent means (15) which locks the at least one sliding sleeve (1) in each case in the neutral position and in the shifted position.

7. Shift device according to Claim 6, **characterized in that** the detent means (15) is in the form of at least one spring-loaded ball (16) which is positioned in an associated recess (17) of the gearbox shaft (3) and which, in the neutral position and in the shifted position of the at least one sliding sleeve (1), interacts with respectively opposite locking grooves (18, 19) of the at least one sliding sleeve (1).

8. Shift device according to one of the preceding claims, **characterized in that** the at least one sliding sleeve (1), during an axial movement into the shifted position, operates a clutch which is connected to the respective idler gear (4).

9. Shift device according to Claim 8, **characterized in that** a spring element (21) is positioned between the at least one sliding sleeve (1) and the clutch.

10. Shift device according to Claim 8 or 9, **characterized in that** the clutch is a synchromesh (20).

11. Shift device according to Claim 8 or 9, **characterized in that** the clutch is a multiplate clutch (22).

12. Change-speed gearbox of a motor vehicle, comprising a shift device according to one of Claims 1 to 11.

## Revendications

1. Dispositif de commutation pour une boîte de vitesses à engrenages, comprenant au moins un manchon coulissant (1) qui est placé de manière solidaire en rotation et déplaçable axialement sur un arbre de transmission (3) et à côté duquel est placé à chaque fois au moins d'un côté un pignon fou (4) qui est disposé de manière librement rotative sur l'arbre de transmission (3), l'au moins un manchon coulissant (1) pouvant être déplacé axialement dans la direction de chaque pignon fou (4), par un actionnement de moyens de commande associés, depuis une position neutre dans une position de commutation, et à l'obtention de la position de commutation, provoquant un accouplement de chaque pignon fou (4) à l'arbre de transmission (3), **caractérisé en ce que** les moyens de commande associés sont disposés fixement et, lors de l'actionnement, s'engagent dans au moins une rainure de commutation (7, 8) qui est prévue sur un diamètre extérieur de l'au moins un manchon coulissant (1) et qui présente une allure en forme de courbe dans la direction axiale de sorte qu'un déplacement axial de l'au moins un manchon coulissant (1) puisse être provoqué en fonction de l'allure de l'au moins une rainure de commutation (7 ; 8) lors de la rotation de l'arbre de transmission (3).

2. Dispositif de commutation selon la revendication 1, **caractérisé en ce que** des premières et deuxièmes rainures de commutation (7, 8) sont prévues, lesquelles présentent une allure en forme de courbe opposée dans la direction axiale, les premières rainures de commutation (8), lors de l'engagement des moyens de commande, déplaçant l'au moins un manchon coulissant (1) dans la position de commutation, tandis que les deuxièmes rainures de commutation (7), lors de l'engagement des moyens de commande, assurent un mouvement vers l'arrière de l'au moins un manchon coulissant (1) dans la position neutre.

3. Dispositif de commutation selon la revendication 2, **caractérisé en ce que** les premières et deuxièmes rainures de commutation (7, 8) se terminent dans la région d'extrémité au niveau du diamètre extérieur de l'au moins un manchon coulissant (1) à chaque fois dans le sens de rotation.

4. Dispositif de commutation selon l'une quelconque des revendications 1 à 3, **caractérisé en ce que** les moyens de commande sont disposés sur des côtés radiaux opposés de l'au moins un manchon coulissant (1).

5. Dispositif de commutation selon l'une quelconque des revendications précédentes, **caractérisé en ce que** les moyens de commande se présentent sous la forme d'au moins une goupille de commutation pouvant être sortie (9 à 12), laquelle peut être actionnée de manière électromagnétique.

6. Dispositif de commutation selon l'une quelconque des revendications précédentes, **caractérisé en ce que** l'au moins un manchon coulissant (1) est en liaison fonctionnelle au niveau d'un diamètre intérieur avec un enclenchement (15) qui bloque l'au moins un manchon coulissant (1) à chaque fois dans la position neutre et dans la position de commutation.

7. Dispositif de commutation selon la revendication 6, **caractérisé en ce que** l'enclenchement (15) est réalisé sous la forme d'au moins une bille sollicitée par ressort (16) qui est placée dans un évidement associé (17) de l'arbre de transmission (3) et qui coopère, dans la position neutre et la position de commutation de l'au moins un manchon coulissant (1), avec à chaque fois des rainures de blocage opposées (18, 19) de l'au moins un manchon coulissant (1).

8. Dispositif de commutation selon l'une quelconque des revendications précédentes, **caractérisé en ce que** l'au moins un manchon coulissant (1), lors d'un déplacement axial dans la position de commutation, actionne un embrayage qui est en liaison avec le pignon fou respectif (4).

9. Dispositif de commutation selon la revendication 8, **caractérisé en ce qu'**entre l'au moins un manchon coulissant (1) et l'embrayage est placé un élément de ressort (21).

10. Dispositif de commutation selon la revendication 8 ou 9, **caractérisé en ce que** l'embrayage est une synchronisation (20).

11. Dispositif de commutation selon la revendication 8 ou 9, **caractérisé en ce que** l'embrayage est un embrayage à disques (22).

12. Boîte de vitesses à engrenages d'un véhicule automobile, comprenant un dispositif de commutation selon l'une quelconque des revendications 1 à 11.
